# EUROPÄISCHE PATENTANMELDUNG

(11) **EP 0 690 015 A1**
(43) Veröffentlichungstag der Anmeldung: **03.01.1996**
(21) Anmeldenummer: 95109372.3
(22) Anmeldetag: 16.06.1995
(51) Int. Cl.: B65G 35/06, B65G 37/02

(54) **Transportstrecke**

(30) Priorität: 28.06.1994 DE 4422516
(71) Anmelder: ALTRATEC MONTAGESYSTEME GmbH, D-09212 Limbach-Oberfrohna (DE)
(72) Erfinder: Hauf, Hans, D-71701 Schwieberdingen (DE)
(74) Vertreter: Jeck, Anton, Dipl.-Ing.

(57) **Zusammenfassung**

Die Erfindung betrifft eine Transportstrecke (10) mit mindestens einer Förderbahn (12, 14, 16, 18, 20) mit Förderer (26, 28) sowie umlaufenden, zwischen Führungskörpern (50, 52) der Förderbahn (12, 14, 16, 18, 20) angeordneten und mit dem Förderer (26, 28) zusammenarbeitenden Werkstückträger (22). Die Werkstückträger (22) weisen jeweils mindestens einen mit dem Förderer (26, 28) in Betriebsverbindung bringbaren Mitnehmer (60) auf.

## Beschreibung

Die Erfindung betrifft eine Transportstrecke nach dem Oberbegriff des Anspruchs 1.

Bei herkömmlichen Transportstrecken der eingangs genannten Art sind regelmäßig Endlosförderer vorgesehen, deren Transportflächen horizontal verlaufen und die an den Endseiten der Förderbahn um horizontal verlaufende Achsen umgelenkt werden. Sollen die Werkstückträger in einer horizontalen Ebene Umlaufbewegungen ausüben, dann sind an den Umlenkstellen regelmäßig zusätzliche Vorrichtungen vorgesehen, durch welche die Werkstückträger von dem einen Förderbahnabschnitt auf den anderen überführt werden können. Dies ist technisch aufwendig und zudem unterliegen solche Vorrichtungen einem Verschleiß. Dies um so mehr, wenn es sich um Transportstrecken handelt, die mehrere, insbesondere quer zueinander verlaufende, Förderbahnen aufweisen.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Weitere zweckmäßige und vorteilhafte Ausgestaltungen der Erfindung gehen aus den abhängigen Ansprüchen hervor.

Eine besonders zweckmäßige Ausgestaltung sieht vor, daß die Mitnehmer elastisch vorgespannte Körper sind, die mit dem Förderer in Druckverbindung bringbar sind. Im Rahmen dieses Erfindungsgedankens ist es besonders zweckmäßig, wenn die Mitnehmer in Ausnehmungen der Werkstückträger angeordnet und quer zu Bewegungsrichtung der Werkstückträger federbelastet sind. Diese Maßnahmen sind insbesondere dann von besonderer Bedeutung, wenn es sich beim Förderer um einen um vertikale Achsen umlaufenden Gurt handelt, der mit den Mitnehmern zusammenarbeitet. Bevorzugt wird hier der Vorteil von Reibverbindungen genutzt.

Eine weitere zweckmäßige Ausgestaltung sieht bei einer Transportstrecke mit einem Gestellt mit als Schienen ausgebildeten Führungsorganen vor, daß die Werkstückträger zwischen jeweils zwei parallel zueinander verlaufenden Schienen angeordnet sind, welche die Förderbahn der Werkstückträger definieren. Um Werkstückträger mit unterschiedlicher Breite verwenden zu können, sieht eine weitere zweckmäßige Ausgestaltung der Erfindung vor, daß die Bodenseiten der Schienen einander zugekehrte Laufvorsprünge aufweisen, auf denen die Werkstückträger geführt sind. Dabei ist es besonders zweckmäßig, wenn die Werkstückträger Laufrollen aufweisen, die auf den Laufvorsprüngen abrollen. Eine genaue Führung der Werkstückträger ist insbesondere dann erreichbar, wenn die Laufvorsprünge nach unten zu abfallen und wenn die Laufrollen hierbei kegelstumpfförmige Laufflächen aufweisen, die auf den Laufvorsprüngen satt aufliegen.

Die Erfindung betrifft auch eine Transportstrecke mit mindestens zwei quer zueinander verlaufenden Förderbahnen sowie mindestens einer Vorrichtung zum Ein- und Ausschleusen bzw. Umlenken der Werkstückträger, durch welche die Werkstückträger von einer Förderbahn auf die andere Förderbahn und gegebenenfalls zurück überführbar sind. Im Rahmen dieser Weitergestaltung der Erfindung ist es zweckmäßig, wenn die Vorrichtung eine um eine vertikale Achse verschwenkbare Weiche ist, deren Arbeitsseite bogenförmig ausgebildet ist. Hierbei ist es zweckmäßig, wenn die Weiche zwischen einer Schließ- und einer Öffnungsstellung verschwenkbar ist. Um die Werkstückträger von einer Förderbahn auf die andere und gegebenenfalls zurück einfach überführen zu können, sieht eine weitere zweckmäßige Ausgestaltung der Erfindung vor, daß zwischen jeweils zwei Förderbahnen jeweils mindestens zwei Weichen angeordnet sind.

Ein Ausführungsbeispiel der Erfindung ist in der Zeichnung schematisch dargestellt und wird im folgenden näher erläutert. Es zeigen
- Fig. 1: eine Transportstrecke mit insgesamt fünf Förderbahnen in Draufsicht,
- Fig. 2: den mit II bezeichneten Teil nach Fig. 1 vergrößert dargestellt und
- Fig. 3: einen Schnitt entlang der Linie A-A nach Fig. 2.

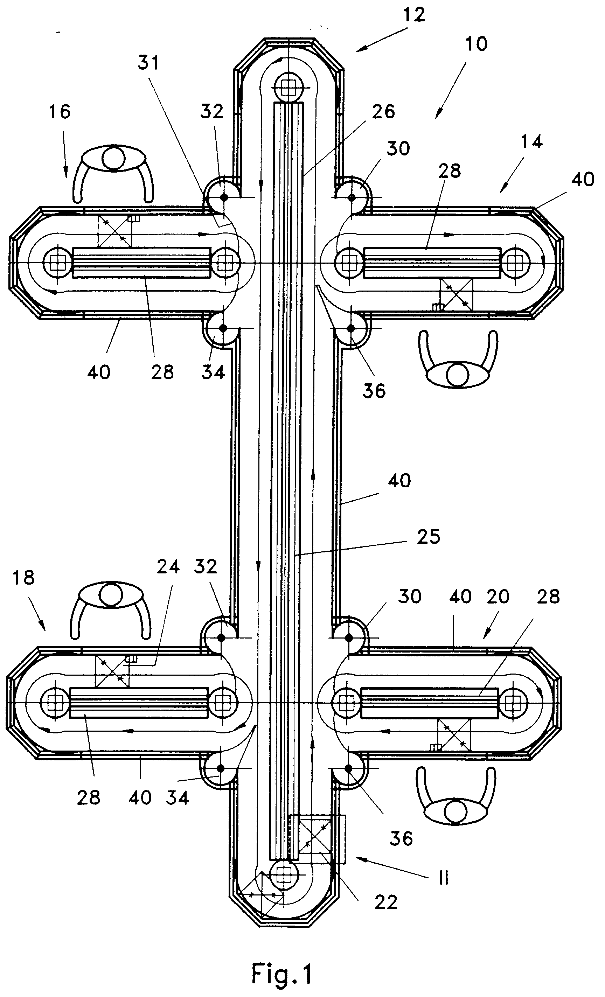

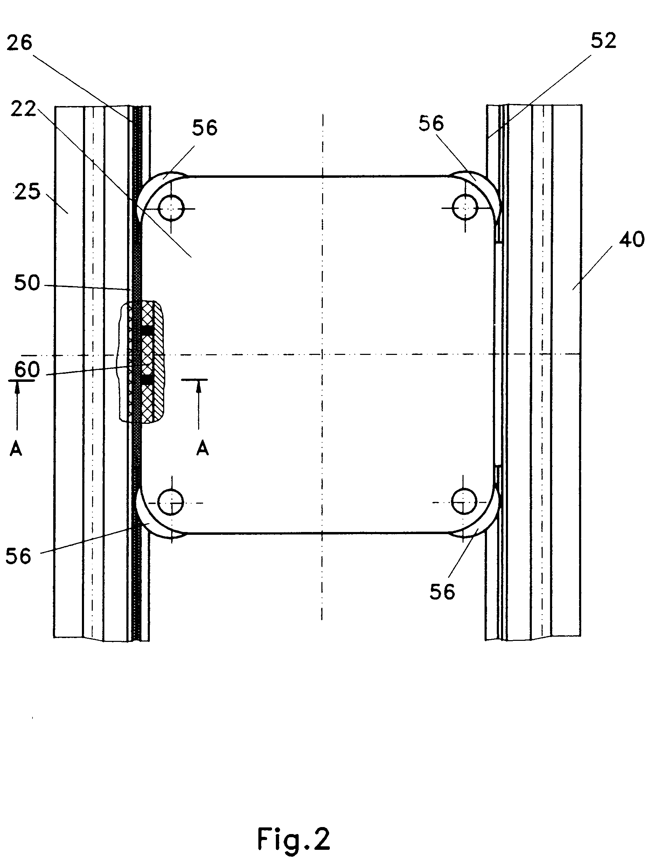

In Figur 1 ist eine Transportstrecke 10 mit insgesamt fünf Förderbahnen 12, 14, 16, 18 und 20 dargestellt. Jede Förderbahn hat einen Förderer 26, 28 in Form eines umlaufenden Gurtes. Die Umlenkachsen 1, 2 der Gurte sind vertikal ausgerichtet. Die Förderbahn 12 ist als Hauptförderbahn ausgebildet, an die sich die Förderbahnen 14, 16, 18 und 20 anschließen. Der Aufbau der Nebenförderbahnen 14, 16, 18 und 20 ist im wesentlichen der Gleiche wie bei der Förderbahn 12. Dabei besitzt jede Förderbahn Führungskörper 50 und 52 (vgl. Fig. 2), die zur Führung der Werkstückträger 22 und 24 dienen. Im Bereich der Stoßstelle zwischen jeweils zwei Förderbahnen sind jeweils zwei Vorrichtungen zum Ein- und Ausschleusen bzw. Umlenken der Werkstückträger 22 vorgesehen, durch welche die Werkstücksträger 22 von der Förderbahn 12 auf die Nebenförderbahnen 14 bis 20 und zurück überführbar sind. Bei den Vorrichtungen 30 bis 36 handelt es sich um Weichen, die um vertikale Achsen verschwenkbar sind und deren Arbeitsseiten 31 bogenförmig ausgebildet sind. Die Weichen 30 bis 36 sind zwischen jeweils einer Schließ- und einer Öffnungsstellung verschwenkbar. Die Pfeile der Förderbahnen 12 bis 20 zeigen die Bewegungsrichtung der Förderer 26 und 28. Die Weichen 30 bis 36 sind an eine zentrale und nicht näher dargestellte Steuerungseinheit angeschlossen, durch die bestimmt wird, welche Weiche öffnet bzw. schließt, so daß der jeweilige Werkstückträger die vorgesehene Strecke absolviert.

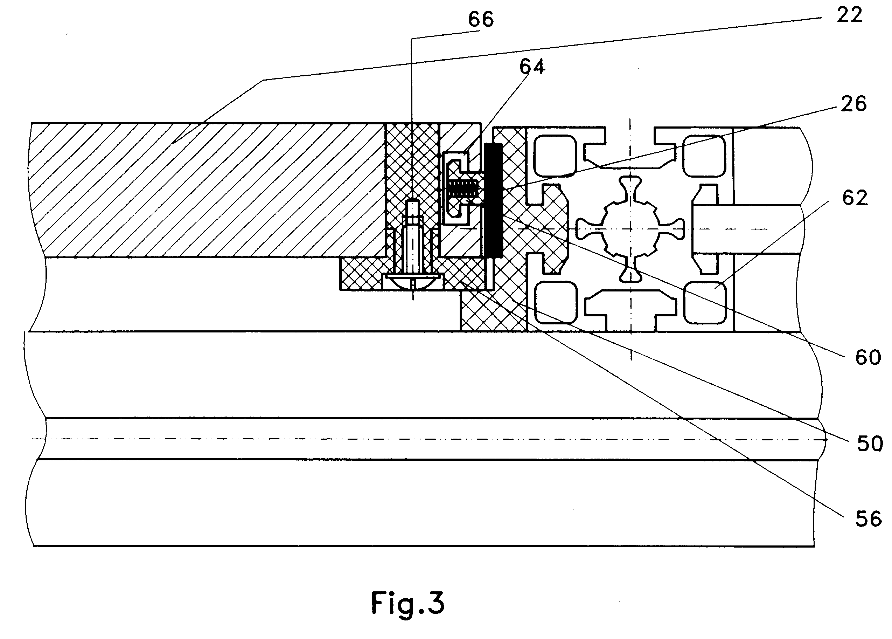

Die Figuren 2 und 3 zeigen den näheren Aufbau des Werkstückträgers 22 mit Mitnehmer 60. Jeder Werkstückträger 22, 24 besitzt jeweils mindestens einen mit dem Förderer 26 bzw. 28 in Betriebsverbindung bringbaren Mitnehmer 60. Der Mitnehmer 60 ist ein elastisch vorgespannter Körper, der mit dem Förderer (Gurt) 26 in Druckverbindung bringbar ist. Dabei ist der Mitnehmer 60 in einer Ausnehmung 64 des Werkstückträgers 22 angeordnet und quer zur Bewegungsrichtung des Werkstückträgers 24 federbelastet verstellbar. Ferner lassen die Figuren 2 und 3 erkennen, daß die Transportstrecke ein Gestell 62 mit als Schienen ausgebildeten Führungsorganen 50 und 52 aufweist. Die Werkstückträger 22 sind zwischen jeweils zwei parallel zueinander verlaufenden Schienen 50 und 52 angeordnet, die die Förderbahnen 12 bis 20 der Werkstückträger 22 definieren. Die Bodenseiten der Schienen 50 und 52 weisen Laufvorsprünge 51 auf, auf denen die Werkstückträger 22 geführt sind. Hierfür besitzt der Werkstückträger 22 Laufrollen 56, die auf den Laufvorsprüngen 51 abrollen. Die Drehachsen 66 der Laufrollen 56 erstrecken sich vertikal und quer zur Bewegungsrichtung der Werkstückträger 22. Man erkennt, daß die Werkstückträger in ihrer Draufsicht rechteckförmig sind, wobei die Laufrollen 52 in den Eckbereichen der Werkstückträger 22 angeordnet sind.

Um auf den zugeordneten Gurt 26 bzw. 27 gleichmäßigen Druck ausüben zu können, sind mehrere Mitnehmer vorgesehen, die mit jeweils einem Federkörper zusammenarbeiten und die sich entlang des Werkstückträgers und in seiner Bewegungsrichtung erstrecken. Mehrere Mitnehmer haben den Vorteil, daß eine betriebsgemäße Verbindung zwischen dem Werkstückträger 22 und dem jeweiligen Gurt auch dann gewährleistet ist, wenn der Werkstückträger von einem Förderer auf einen anderen überführt wird. Die Gurte 26 und 28 haben eine rauhe Oberfläche, wodurch der gewünschte Mitnahmeeffekt gewährleistet ist. Der Werkstückträger 22 kann an seinen beiden parallel zueinander und in Bewegungsrichtung sich erstreckenden Seiten Mitnehmer aufweisen, so daß der Werkstückträger in jeder seiner Arbeitsposition mit dem Gurt in Betriebsverbindung bringbar ist.

## Patentansprüche

1. Transportstrecke (10 mit mindestens einer Förderbahn (12, 14, 16, 18, 20) mit mindestens einem Förderer (26, 28) sowie mit umlaufenden, zwischen Führungskörpern (50, 52) der Förderbahn (12, 14, 16, 18, 20) angeordneten und mit dem Förderer (26, 28) zusammenarbeitenden Werkstückträgern (22),
dadurch gekennzeichnet,
daß die Werkstückträger (22) jeweils mindestens einen mit dem Förderer (26, 28) in Betriebsverbindung bringbaren Mitnehmer (60) aufweisen.

2. Transportstrecke nach Anspruch 1,
dadurch gekennzeichnet,
daß die Mitnehmer (60) elastisch vorgespannte Körper sind, die mit dem Förderer (26, 28) in Druckverbindung bringbar sind.

3. Transportstrecke nach Anspruch 1 oder 2,
dadurch gekennzeichnet,
daß die Mitnehmer (60) in Ausnehmungen (64) der Werkstückträger (22) angeordnet und quer zur Bewegungsrichtung der Werkstückträger (22) federbelastet verstellbar sind.

4. Transportstrecke nach einem der Ansprüche 1 bis 3,
dadurch gekennzeichnet,
daß der Förderer (26, 28) ein um vertikale Achsen (1, 2) umlaufender Gurt ist.

5. Transportstrecke nach einem der Ansprüche 1 bis 4 mit einem Gestell (62) mit als Schienen ausgebildeten Führungsorganen (50, 52),
dadurch gekennzeichnet,
daß die Werkstückträger (22) zwischen jeweils zwei parallel zueinander verlaufenden Schienen (50, 52) angeordnet sind, welche die Umlaufbahn (15 - 20) der Werkstückträger (22) definieren.

6. Transportstrecke nach einem der Ansprüche 1 bis 5,
dadurch gekennzeichnet,
daß die Bodenseiten der Schienen (50, 52) in Bewegungsrichtung der Werkstückträger sich erstreckende Laufvorsprünge (51) aufweisen, auf denen die Werkstückträger (22) geführt sind.

7. Transportstrecke nach einem der Ansprüche 1 bis 6,
dadurch gekennzeichnet,
daß die Werkstückträger (22) Laufrollen (56) aufweisen, die auf den Laufvorsprüngen (51) abrollen.

8. Transportstrecke nach einem der Ansprüche 1 bis 7,
dadurch gekennzeichnet,
daß die Laufvorsprünge (51) nach unten zu abfallen und daß die Laufrollen kegelstumpfförmige Laufflächen aufweisen, die auf den Laufvorsprüngen aufliegen.

9. Transportstrecke nach einem der Ansprüche 1 bis 8,
dadurch gekennzeichnet,
daß die Drehachsen (66) der Laufrollen (56) sich vertikal und quer zur Bewegungsrichtung der Werkstückträger (22) erstrecken.

10. Transportstrecke nach einem der Ansprüche 1 bis 9 mit in Draufsicht rechteckförmigen Werkstückträgern (22),
dadurch gekennzeichnet,
daß die Laufrollen (52) in den Eckbereichen der Werkstückträger (22) angeordnet sind.

11. Transportstrecke nach einem der Ansprüche 1 bis 10 mit mindestens zwei quer zueinander verlaufenden Förderbahnen (12, 14, 16, 18, 20) sowie mindestens einer Vorrichtung (30, 36) zum Ein- und Ausschleusen bzw. Umlenken der Werkstückträger (22), durch welche die Werkstückträger (22) von einer Förderbahn (12) auf die andere Förderbahn (14, 16, 18, 20) und gegebenenfalls zurück überführbar sind.

12. Transportstrecke nach Anspruch 11,
dadurch gekennzeichnet,
daß die Vorrichtung (30 - 36) eine um eine vertikale Achse verschwenkbare Weiche ist.

13. Transportstrecke nach Anspruch 12,
dadurch gekennzeichnet,
daß die Arbeitsseite (31) der Weiche (30 - 36) bogenförmig ausgebildet ist.

14. Transportstrecke nach Anspruch 11 oder 12,
dadurch gekennzeichnet,
daß die Weiche (30 - 36) zwischen einer Schließ- und einer Öffnungsstellung verschwenkbar ist.

15. Transportstrecke nach einem der Ansprüche 11 bis 14,
dadurch gekennzeichnet,
daß zwischen jeweils zwei Förderbahnen (12, 16) jeweils mindestens zwei Weichen (32, 34) angeordnet sind.
